# EUROPEAN PATENT SPECIFICATION

(11) **EP 3 168 853 B1**
(45) Date of publication and mention of the grant of the patent: **12.09.2018**
(21) Application number: 16194881.5
(22) Date of filing: 20.10.2016
(51) Int. Cl.: H01H 19/04

(54) **ROTARY SWITCH SUITABLE FOR USE IN ADVERSE ENVIRONMENTAL CONDITIONS**
DREHSCHALTER ZUR VERWENDUNG IN WIDRIGEN UMWELTBEDINGUNGEN
COMMUTATEUR ROTATIF ADAPTÉ POUR ÊTRE UTILISÉ DANS DES CONDITIONS AMBIANTES DIFFICILES

(30) Priority: 12.11.2015 IT UB20155510
(43) Date of publication of application: 17.05.2017
(73) Proprietor: Soldo S.r.l. Socio Unico, 25015 Desenzano del Garda (Brescia) (IT)
(72) Inventor: BELTRAMI, Marco, 25030 Castel Mella (Brescia) (IT)
(74) Representative: Wynne-Jones IP Limited

(56) References cited:
- EP-A1- 2 869 325
- WO-A1-2014/002003

## Description

The present invention relates to a rotary switch, provided with visual signalling means, particularly suitable for use in adverse environmental conditions.

In particular, a rotary switch is provided with signalling means, such as a status indicator, to provide a visual indication of the operating condition of an actuator device, such as a valve or an actuator, operatively connected to said switch. A rotary switch of this type, fitted with a visual signalling means, is commonly referred to as a 'limit switch box', hereinafter called, for brevity, LSB.

The LSB switches of the prior art, are usually composed of a body and a cover and contain inside them a rotating member or indicator operatively connected to the shaft of the valve or actuator contained in the body. The rotating members are often equipped with visual indicators of the angular position of the shaft of the valve or actuator, in order to provide, from outside the switch, a visual indication of the operating condition of the valve or actuator. These visual indicators are usually housed on the cover so as to be visible from outside the switch, for example the indicator is typically a disk or cap, integral in rotation with the shaft and provided with a relative mask: the mask is fixed and acts as a fixed reference for the angular position of the indicator.

LSB switches are often used in the extraction and processing industry of hydrocarbons, such as in oil wells, offshore platforms and pipelines. In such types of installation the presence of a high content of carbon dioxide and hydrogen sulphide in the crude oil and gas, combined with harsh environmental conditions (such as in the open sea or in the desert) can give rise to serious corrosion phenomena.

A typical example is corrosion by galvanic contact, which occurs when one metal is in electrical contact with another more noble metal (in actual fact mere mechanical metal-to-metal contact is often enough) and both are exposed to a harsh environment (for example, in presence of sea water or acidic solutions). Such corrosion has as a consequence the slow and progressive oxidation of the less noble material. Moreover, in the case of the combined action of mechanical stress in a corrosive environment, phenomena are often triggered involving he propagation of cracks in the metal which may lead to the piece breaking.

Even LSB switches, which are mainly made of metal, when used in adverse environmental conditions are subject to these types of corrosion which then damage or break them. This causes high costs to be incurred related to direct damage (damaged materials that need to be replaced, replacement operations) and indirect damage (loss of production, downtime of the plant, pollution).

As a result, the need is felt in the sector of industries operating in harsh environments to have available highly reliable products which give rise to low maintenance costs. Document EP2869325 discloses a switch according to the preamble of claim 1.

The need is therefore felt to provide a rotary switch resistant to corrosion.

Such purpose is achieved by a rotary switch made according to claim 1 and by the relative production method according to claim 9.

Other embodiments of the switch according to the invention are described in the subsequent claims.

Further characteristics and advantages of the present invention will be more clearly comprehensible from the description given below of a preferred and non-limiting example of embodiment, wherein:

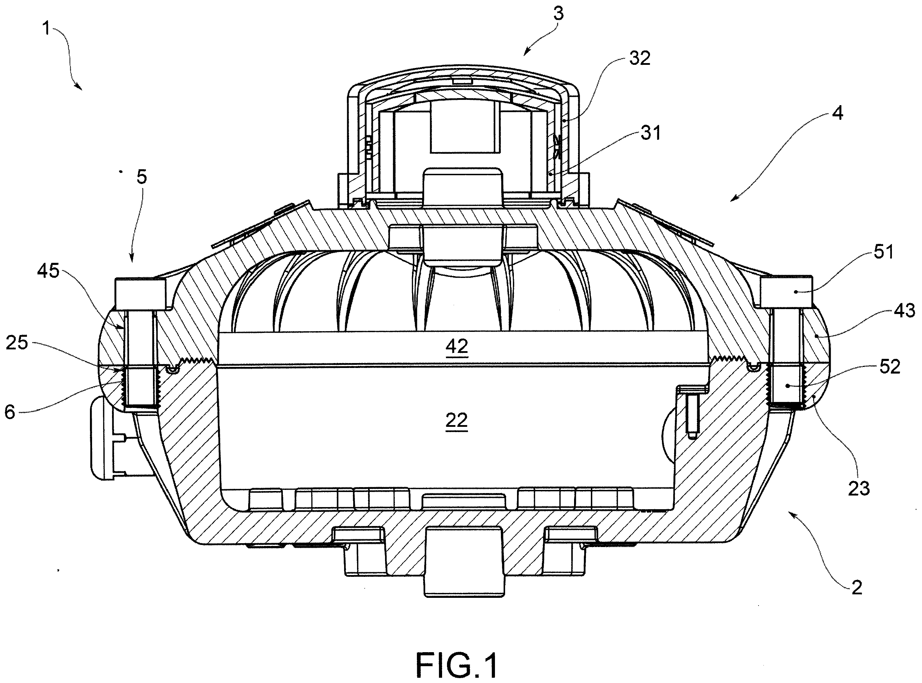

- figure 1 is a side view in cross-section of a rotary switch according to the present invention;

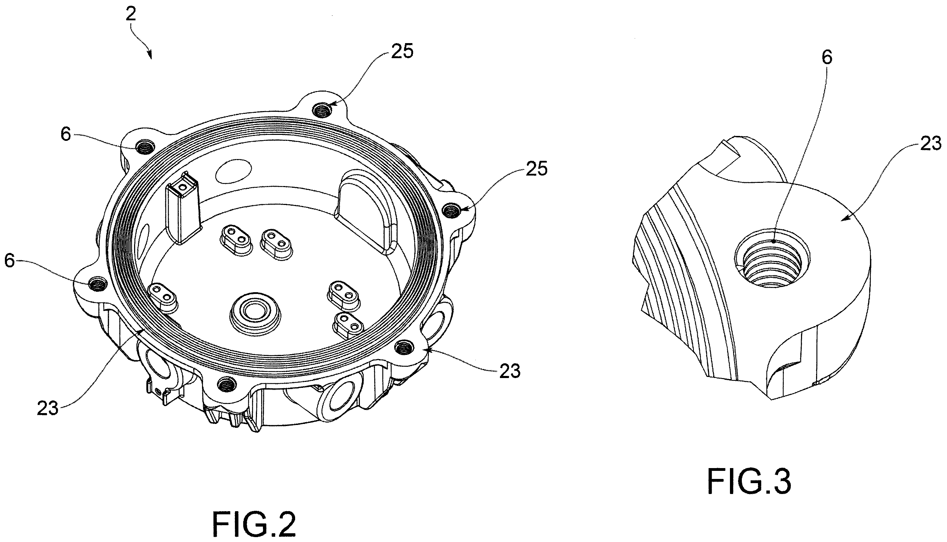

- figure 2 is a perspective view of the body of the rotary switch in figure 1;
- figure 3 is a detail of the body in figure 2;

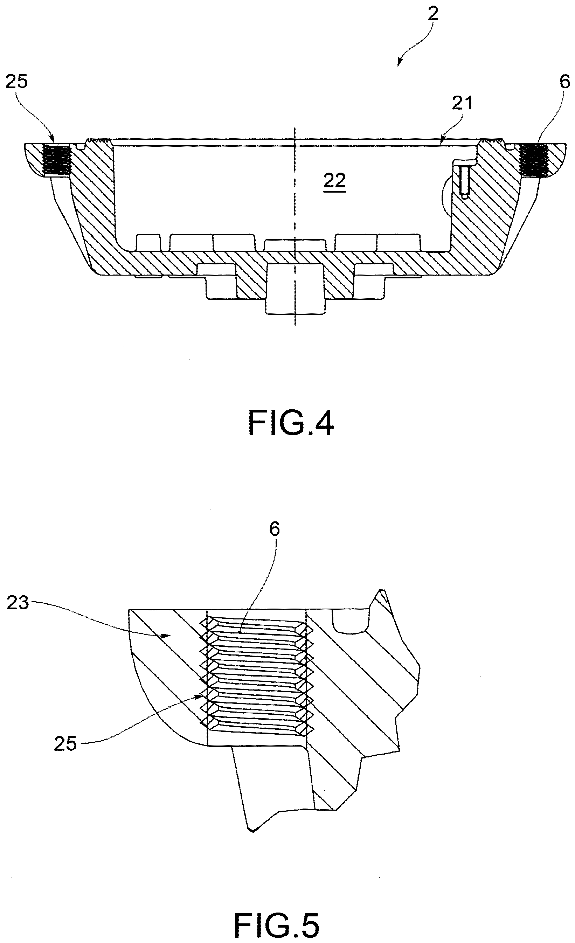

- figure 4 is a side view in cross-section of the body in figure 2;
- figure 5 is a detail of the body in figure 5.

With reference to the aforementioned figures, reference numeral 1 globally denotes a rotary switch, fitted with visual signalling means for providing a visual indication of the operating condition of an external device.

The rotary switch 1 comprises a switch body 2 which rotatably houses a shaft (not shown), rotating around a rotation axis X-X, based on the operation of the external device.

The switch body 2 is made of metal or externally coated in metal. For example, the switch body 2 is made of aluminium or aluminium alloys.

The shape, number of walls and the geometric dimensions of the switch body 2 may be of any type and should not in any way be regarded as limiting for the purposes of the present invention.

The switch body 2 comprises an opening 21 for access to the internal compartment 22 in which the shaft is rotatably housed.

The switch body 2 comprises, at the opening 21, an edge 23 protruding outwards.

The rotary switch 1 comprises a cover 4, joined to close the switch body 2, and fitted with visual signalling means 3 rotatably connected to the rotary shaft about the axis of rotation X-X.

Preferably, the cover 4 is made of metal or is externally coated in metal.

The cover 4 comprises an opening for access to the internal compartment 42 in which the shaft is rotatably housed.

The cover 4 comprises, at the opening 21, an edge 43 protruding outwards.

Preferably, the visual signalling means 3 comprise an indicator 31 joined in rotation to said shaft 20, so as to permit a visual signalling of the angular position and/or operating condition of the rotating shaft, from outside the rotary switch 1.

According to one embodiment, the indicator 31 is rotatable around said rotation axis X-X, and may be provided with a cover 32 to allow the visual signalling of the state of operation of the external device. For example, the cover 32 acts as a mask so as to permit a rapid and effective identification of the state of operation of the external device; for example the cover 32 comprises masked areas and the indicator 31 comprises operating signals, such as the wording 'open-close'.

Indications of the operating status of the external device are shown on the indicator 31, operatively connected to the shaft, said indications being shown by mechanical, chemical, electrochemical procedures or by the affixing of labels.

The cover 4 is joined to close the switch body 2 by means of a plurality of attachment screws 5, each housed in a special seat 45,25 provided simultaneously in the cover 4 and in the switch body 2;

The switch body 2 preferably comprises at the edge 23, a plurality of seats 25. The cover 4 also preferably comprises, at the edge 43, a plurality of seats 45 arranged in correspondence with the seats 25 of the switch body 2.

The seat 25 made in the switch body 2 is a nut screw, i.e. a threaded hole. Preferably, the seat 25 is a through threaded hole.

Preferably, the seat 45 made in the cover 4 is a threaded through hole in the first section to make the screw captive.

The attachment screws 5 are made of metal or externally coated in metal. For example, the attachment screws 5 are made of steel, preferably stainless steel.

The attachment screw 5 comprises a head 51 and a threaded end portion 52. Preferably, the attachment screws 5 are coach screws.

Even in the conventional rotary switches, the cover is joined to close the switch body by means of a plurality of screws. It is to be noted that the body and the screws are made of different metal materials, and in particular the body is usually made of less noble metal. Therefore, when the conventional rotary switch is used in adverse environmental conditions and thus exposed to a harsh environment, the mere mechanical metal-to-metal contact between the body and screws triggers corrosion by galvanic contact. Such corrosion leads to the formation of rust which seals the screw to the nut screw and prevents the opening of the conventional rotary switch for performing maintenance operations. Furthermore, the corrosion combined with the mechanical stresses due to screwing of the screws into the body triggers propagation of the cracks in the metal which leads to breaking of the conventional rotary switch.

As a result, advantageously, the rotary switch 1 according to the present invention provides for the insertion, inside the seat 25 made in the switch body 2, of an insert 6.

The insert 6 is a cylindrical element (for example a bushing) threaded externally to engage in the nut screw of the seat 25, and internally to receive the attachment screw 5 which engages in its thread.

Advantageously - the insert 6 is made of a material suitable to prevent the occurrence of galvanic currents between the seat 25 of the switch body 2 and the attachment screw 5.

In one embodiment, the insert 6 is made of the same metal material as the attachment screw 5: consequently between the insert and the screw no corrosive phenomena are triggered. In this example, the insert 6 is made of more noble metal with respect to the switch body 2: therefore between the body and the insert corrosion phenomena could be triggered. However, the possible formation of oxide between the body and the insert, which further seals said two elements does not interfere with the rotary switch 1 according to the present invention for carrying out maintenance operations. In this embodiment, the insert 6 makes it possible to shift the corrosive phenomenon from the body-screw to the body-insert.

In the embodiment in which the switch body 2 is made of aluminium or aluminium alloys and the attachment screw 5 is made of steel, the insert 6 is for example made of steel, preferably stainless steel.

In a further embodiment, the insert 6 is made of insulating material or coated in insulating material: consequently between the insert and the screw no corrosive phenomena are triggered. This way it is possible to prevent the circulation of micro-currents and prevent the corrosion of the less noble of the two metals. In this example therefore, the insert 6 is able to electrically isolate the two metals and prevent any circulation of current between them. The insert 6 thus makes it possible to prevent any corrosion phenomenon between body-insert and insert-screw.

In the embodiment in which the switch body 2 is made of aluminium or aluminium alloys and the attachment screw 5 is made of steel, the insert 6 is for example made of steel coated in insulating material or charged plastic.

The present invention also relates to a production method of a rotary switch 1 fitted with a cover 4 joined to close the switch body 2 by means of a plurality of attachment screws 5, each housed in a special seat 45,25 provided in the cover 4 and in the switch body 2. In particular, the method provides for:
- providing a switch body 2 made of metal or externally coated in metal;
- making a seat 25 in the switch body 2;
- inserting inside the seat 25 an insert 6 made of a material suitable to prevent the occurrence of galvanic currents between the seat 25 of the switch body 2 and the attachment screw 5.

In particular the step of making a seat 25 provides for making a nut screw in the switch body 2 and the step of inserting the insert 6 provides for screwing the insert 6, threaded both internally and externally, into the nut screw.

Innovatively, a rotary switch 1 according to the present invention is corrosion-resistant and particularly suitable for use in adverse environments (such as oil platforms in the open sea or oil wells in the desert).

Advantageously, a rotary switch 1 according to the present invention, provided with an insert 6 between the nut screw of the seat 25 of the switch body 2 and the attachment screw 5, is not subject to the occurrence of corrosive events between body and screw.

A person skilled in the art may make numerous modifications and variations to the rotary switch described above so as to satisfy contingent and specific requirements while remaining within the sphere of protection of the invention as defined by the following claims .

## Claims

1. Rotary switch (1) comprising:
- a switch body (2) in metal or externally coated in metal; **characterised by**
- a cover (4) joined to close the switch body (2) by means of a plurality of attachment screws (5) in metal or externally coated in metal, each housed in seats provided (45, 25) arranged in the cover (4) and in the switch body (2);
wherein inside the seat (25) of the switch body (2) there is an insert (6) made of a material suitable to prevent the circulation of galvanic currents between the seat (25) of the switch body (2) and the attachment screw (5).

2. Rotary switch (1) according to claim 1, wherein the seat (25) made in the switch body (2) is a nut screw, namely a threaded hole, usually a through hole.

3. Rotary switch (1) according to claim 2, wherein the insert (6) is a cylindrical element externally threaded to mesh in the nut screw of the seat (25) and internally threaded to receive the attachment screw (5).

4. Rotary switch (1) according to any of the preceding claims, wherein the switch body (2) is made of aluminium or aluminium alloys and the attachment screws (5) are screws made of steel, preferably stainless steel.

5. Rotary switch (1) according to any of the preceding claims, wherein the insert (6) is made of the same metal material as the attachment screw (5).

6. Rotary switch (1) according to claim 5, wherein the insert (6) is made of steel, preferably stainless steel.

7. Rotary switch (1) according to any of the claims 1 to 4, wherein the insert (6) is made of insulating material or coated with insulating material.

8. Rotary switch (1) according to claim 7, wherein the insert (6) is made of plastic, preferably charged plastic.

9. A manufacturing method of a rotary switch (1) fitted with a cover (4) joined so as to close the switch body (2) by means of a plurality of attachment screws (5) in metal or externally coated in metal, comprising the steps of:
- providing a switch body (2) in metal or externally coated in metal;
- making a seat (25) in the switch body (2);
- inserting inside the seat (25) an insert (6) made of a material suitable to prevent the circulation of galvanic currents between the seat (25) of the switch body (2) and the attachment screw (5).

10. A manufacturing method of a rotary switch (1) according to claim 9, wherein the step of making a seat (25) provides for making a nut screw in the switch body (2) and the step of inserting the insert (6) provides for screwing the insert (6), threaded both internally and externally, into the nut screw.

## Patentansprüche

1. Drehschalter (1), umfassend einen Schalterkörper (2) aus Metall oder außen beschichtet mit Metall, **gekennzeichnet durch** einen Deckel (4), der so verbunden ist, daß er den Schalterkörper (2) mit Hilfe mehrerer Befestigungsschrauben (5) in Metall oder außen mit Metall beschichtet, schließt, wobei alle Befestigungsschrauben sich in vorgesehenen Sitzen (45, 25) befinden, die in dem Deckel (4) und in dem Schalterkörper (2) angeordnet sind, wobei des weiteren im Inneren des Sitzes (25) des Schalterkörpers (2) sich ein Einsatz (6) befindet, der aus einem geeignetem Material besteht, um die Zirkulation von galvanischen Strömen zwischen dem Sitz (25) des Schalterkörpers (2) und der Befestigungsschraube (5) zu verhindern.

2. Drehschalter (1) nach Anspruch 1, **dadurch gekennzeichnet, daß** der Sitz (25), der in dem Schalterkörper (2) ausgebildet ist, eine Schraubenmutter ist, nämlich eine Gewindebohrung, üblicherweise eine Durchgangsbohrung.

3. Drehschalter (1) nach Anspruch 2, **dadurch gekennzeichnet, daß** der Einsatz (6) ein zylindrisches Element ist, das außen mit Gewinde versehen ist, welches in die Schraubenmutter des Sitzes (25) eingreift und zur Aufnahme der Befestigungsschraube (5) mit einem Innengewinde versehen ist.

4. Drehschalter (1) nach einem der vorhergehenden Ansprüche, **dadurch gekennzeichnet, daß** der Schalterkörper (2) aus Aluminium oder Aluminiumlegierungen besteht, und daß die Befestigungsschrauben (5) Schrauben aus Stahl sind, vorzugsweise aus rostfreiem Stahl.

5. Drehschalter (1) nach einem der vorhergehenden Ansprüche, **dadurch gekennzeichnet, daß** der Einsatz (6) aus demselben metallenen Material wie die Befestigungsschraube (5) besteht.

6. Drehschalter (1) nach Anspruch 5, **dadurch gekennzeichnet, daß** der Einsatz (6) aus Stahl, vorzugsweise rostfreiem Stahl gefertigt ist.

7. Drehschalter (1) nach einem der Ansprüche 1 bis 4, **dadurch gekennzeichnet, daß** der Einsatz (6) aus Isoliermaterial gefertigt oder mit Isoliermaterial beschichtet ist.

8. Drehschalter (1) nach Anspruch 7, **dadurch gekennzeichnet, daß** der Einsatz (6) aus Kunststoff, vorzugsweise beschichtetem Kunststoff, besteht.

9. Herstellungsverfahren für einen Drehschalter (1), der mit einem Deckel (4) verbunden ist, um den Schalterkörper (2) mittels mehrerer Befestigungsschrauben (5) aus Metall oder außen mit Metall beschichtet, zu schließen, umfassend die folgenden Schritte:
- Schaffen eines Schalterkörpers (2) aus Metall oder außen mit Metall beschichtet;
- Herstellen eines Sitzes (25) in dem Schalterkörper (2);
- Einsetzen eines Einsatzes (6) in den Sitz (25), wobei dieser Einsatz aus einem Material besteht, das geeignet ist, die Zirkulation galvanischer Ströme zwischen dem Sitz (25) des Schalterkörpers (2) und der Befestigungsschraube (5) zu verhindern.

10. Verfahren zur Herstellung eines Drehschalters (1) nach Anspruch 9, **dadurch gekennzeichnet, daß** der Schritt des Herstellens eines Sitzes (25) das Schaffen einer Schraubenmutter in dem Schalterkörper (2) vorsieht und der Schritt des Einsetzens des Einsatzes (6) das Verschrauben des Einsatzes (6) mit der Schraubenmutter vorsieht, wobei beide mit Innen- und Außengewinde verschraubt werden.

## Revendications

1. Commutateur rotatif (1) comprenant :
- un corps de commutateur (2) en métal ou revêtu extérieurement de métal ;
**caractérisé par** :
- un couvercle (4) relié pour fermer le corps de commutateur (2) au moyen d'une pluralité de vis de fixation (5) en métal ou revêtues extérieurement de métal, chacune étant reçue dans des sièges (45, 25) disposés dans le couvercle (4) et dans le corps de commutateur (2) ;
à l'intérieur du siège (25) du corps de commutateur (2) se trouvant un insert (6) fait d'un matériau approprié pour empêcher la circulation de courants galvaniques entre le siège (25) du corps de commutateur (2) et la vis de fixation (5).

2. Commutateur rotatif (1) selon la revendication 1, dans lequel le siège (25) réalisé dans le corps de commutateur (2) est un écrou, notamment un trou fileté, habituellement un trou traversant.

3. Commutateur rotatif (1) selon la revendication 2, dans lequel l'insert (6) est un élément cylindrique fileté extérieurement pour s'accoupler dans l'écrou du siège (25) et fileté intérieurement pour recevoir la vis de fixation (5).

4. Commutateur rotatif (1) selon l'une quelconque des revendications précédentes, dans lequel le corps de commutateur (2) est fait d'aluminium ou d'alliages d'aluminium et les vis de fixation (5) sont des vis faites d'acier, de préférence d'acier inoxydable.

5. Commutateur rotatif (1) selon l'une quelconque des revendications précédentes, dans lequel l'insert (6) est fait du même matériau métallique que la vis de fixation (5).

6. Commutateur rotatif (1) selon la revendication 5, dans lequel l'insert (6) est fait d'acier, de préférence d'acier inoxydable.

7. Commutateur rotatif (1) selon l'une quelconque des revendications 1 à 4, dans lequel l'insert (6) est fait de matériau isolant ou revêtu de matériau isolant.

8. Commutateur rotatif (1) selon la revendication 7, dans lequel l'insert (6) est fait de matière plastique, de préférence de matière plastique chargée.

9. Procédé de fabrication d'un commutateur rotatif (1) monté avec un couvercle (4) relié de façon à fermer le corps de commutateur (2) au moyen d'une pluralité de vis de fixation (5) en métal ou revêtues extérieurement de métal, comprenant les étapes :
- disposer un corps de commutateur (2) en métal ou revêtu extérieurement de métal ;
- réaliser un siège (25) dans le corps de commutateur (2) ;
- insérer à l'intérieur du siège (25) un insert (6) fait d'un matériau approprié pour empêcher la circulation de courants galvaniques entre le siège (25) du corps de commutateur (2) et la vis de fixation (5).

10. Procédé de fabrication d'un commutateur rotatif (1) selon la revendication 9, dans lequel l'étape de réalisation d'un siège (25) comprend placer un écrou dans le corps de commutateur (2) et l'étape d'insertion de l'insert (6) comprend visser l'insert (6), fileté à la fois intérieurement et extérieurement, dans l'écrou.
